(19) Europäisches Patentamt
European Patent Office
Office européen des brevets

(11) EP 2 563 893 B1

(12) # EUROPEAN PATENT SPECIFICATION

(45) Date of publication and mention of the grant of the patent:
**14.05.2014 Bulletin 2014/20**

(21) Application number: **11701688.1**

(22) Date of filing: **03.02.2011**

(51) Int Cl.:
***C11D 3/40*** $^{(2006.01)}$

(86) International application number:
**PCT/EP2011/051568**

(87) International publication number:
**WO 2011/134685 (03.11.2011 Gazette 2011/44)**

(54) **BIS-HETEROCYCLIC AZO DYES**

BIS-HETEROZYKLISCHE AZOFARBSTOFFE

COLORANTS AZOÏQUES BIS-HÉTÉROCYCLIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2010 EP 10161421**

(43) Date of publication of application:
**06.03.2013 Bulletin 2013/10**

(73) Proprietors:
- **Unilever PLC**
  **London, Greater London EC4Y 0DY (GB)**
  Designated Contracting States:
  **CY GB IE MT**
- **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**

(72) Inventors:
- **BATCHELOR, Stephen, Norman**
  **Wirral**
  **Merseyside CH63 3JW (GB)**
- **BIRD, Jayne, Michelle**
  **Wirral**
  **Merseyside CH63 3JW (GB)**

(74) Representative: **Avila, David Victor**
**Unilever Patent Group**
**Colworth House**
**Sharnbrook**
**Bedford**
**MK44 1LQ (GB)**

(56) References cited:
**WO-A1-2007/096067**
**WO-A1-2009/087034**
**US-A1- 2005 235 429**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of Invention

The present invention concerns laundry shading dye compositions.

Background of the Invention

WO2006/045375 (Unilever), disclose the use of uncharged blue or violet mono-azo dyes in detergent formulations. Azothiophenes, azobenzothiazoles and azopyridones are disclosed.

US7208459 (Procter and Gamble) and WO2008/087497 (Procter and Gamble) disclose the use of uncharged blue or violet thiopene dyes in detergent formulations. These dyes have one heterocyclic component and show high lightfastness on nylon-elastane fabrics and result in overblueing of fabrics.

Summary of the Invention

We have found that overblueing of nylon-elastane fabrics after multiple washes is reduced by selecting heterocyclic mono-azo dyes of lower lightfastness.

In one aspect the present invention provides a laundry treatment composition comprising:

(i) from 2 to 70 wt% of a surfactant; and,
(ii) from 0.00001 to 0.5 wt% of an uncharged blue or violet mono-azo dye,
wherein the uncharged blue or violet mono-azo dyes are selected from:

$$D_1\text{-}N{=}N\text{-}D_2,$$

wherein $D_1$ is a heterocyclic aromatic group; and,
$D_2$ is a heteroaromatic aromatic group.

In another aspect the present invention provides a method of treating a laundry textile, the method comprising the steps of:

(i) treating a textile with an aqueous solution of the uncharged blue or violet mono-azo dye, the aqueous solution comprising from 0.1 ppb to 500 ppm, most preferably 20ppb to 1 ppm of the dye and, from 0.0 g/L to 3 g/L, preferably 0.3 to 2 g/L, of a surfactant;

(ii) optionally rinsing; and,

(iii) drying the textile.

Detailed Description of the Invention

The uncharged blue or violet mono-azo dye is an organic molecule which when dissolved in an organic solvent has a molar absorption extinction coefficient of at least 5000 $mol^{-1}$ L $cm^{-1}$, preferably greater than 20000 $mol^{-1}$ L $cm^{-1}$ at a wavelength in the range 400 to 700nm, preferably 500 to 650nm, most preferably 540 to 600nm.

Molar absorption coefficients are preferably measured in an organic solvent, preferably propan-2-ol, using a 1, 5 or 10 cm cell.

By uncharged it should be taken that the dye is uncharged in an aqueous medium at a pH of 7.

The shading dyes used in the present invention are blue or violet. In this regard the dye gives a blue or violet colour to a white cloth with a hue angle of 240 to 345, more preferably 260 to 320, most preferably 270 to 300. The white cloth used is bleached non-mercerised woven cotton sheeting.

The uncharged blue or violet mono-azo dye may be a mixture of dyes falling under the generic structure.

Heteroaromatic groups have at least one ring containing one of more elements other than carbon. Preferably the heteroatom is selected from N, 0 and S, most preferably N and S. Preferably the heteroatom(s) of the heteroaromatic groups is part of a five or six membered ring. Preferably the Heteroaromatic is a monocyclic six or five membered heterocyclic aromatic group.

$D_1$ and $D_2$ are directly bound to the nitrogen atoms of the azo group. Preferably, the azo group is directly bound to the carbon atoms of the heterocyclic aromatic groups of $D_1$ and $D_2$ and not directly bound to the heteroatoms of the heterocyclic aromatic groups of $D_1$ and $D_2$.

Preferably the $D_2$ has an amine covalently bound to a carbon atom adjacent (one bond removed therefrom) to the heteroatom on the heteroaromatic ring. Preferably the amine is a secondary or tertiary amine, most preferably a tertiary amine. Preferably $D_1$ does not contain an amine.

Preferably $D_1$ and $D_2$ are selected from: thiophene; thiazole; isothiazole; thiadiazole; and, pyridinyl. Most preferably $D_1$ is a thiophene.

Preferred dyes are of the form:

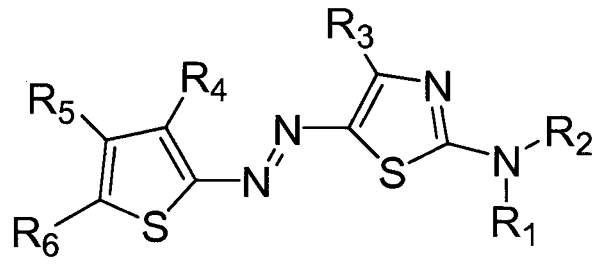

,

(I);

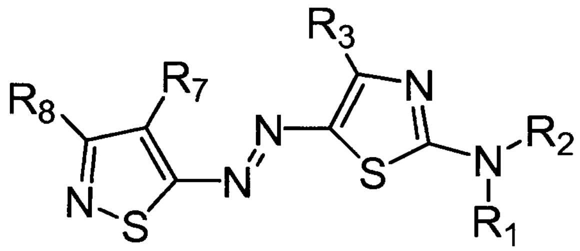

(II);

and,

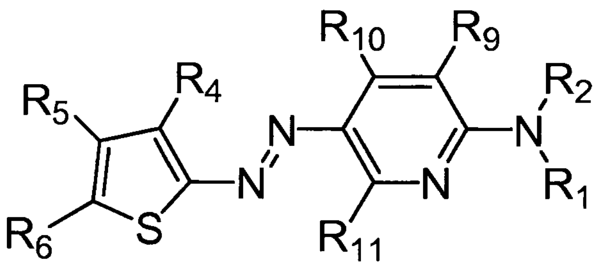

(III),

wherein:

$R_1$ and $R_2$ are independently selected from: H; C1-C8-alkyl; benzyl; phenyl; and, polyoxyalkylene, and wherein only one of $R_1$ and $R_2$ may be H. Preferably, one of $R_1$ and $R_2$ is a polyoxyalkylene.

$R_3$ is selected from: acid amide; C1-C8-alkyl; heteroaromatic; and, aryl. Most preferably $R_3$ is selected from: $NHCOCH_3$; phenyl; and, thienyl, more preferably phenyl; and, thienyl.

$R_4$ is selected from: CN; $NO_2$; alkoxy; carboxylic acid ester; alkylsulfonyl; and, arylsulfonyl. Preferably $R_4$ is CN.

$R_5$ is selected from: F; Cl; Br; CN; $NO_2$; alkoxy; phenyl; benzyl; amine; alkyl; and, carboxylic acid ester. Preferably $R_5$ is selected from: $CH_3$; and, $C_2H_5$.

$R_6$ selected from: H; CN; $NO_2$; alkoxy; carboxylic acid ester alkylsulfonyl; and, arylsulfonyl. Preferably $R_6$ is CN.

$R_7$ is selected from: CN; SCN; F; Cl; Br. Preferably $R_7$ is CN.

$R_8$ is selected from: C1-C8-alkyl; heteroaromatic; and, aryl. $R_8$ is preferably selected from: thienyl; and, phenyl.

$R_9$ is selected from CN; $NH_2C(O)$; $NO_2$; and, acetyl. Preferably $R_9$ is CN.

$R_{10}$ is a C1-C8-alkyl group and is preferably $CH_3$ or $C_2H_5$.

$R_{11}$ is an acid amide and is preferably $NHCOCH_3$.

More preferably the dye is selected from structures (I) and (II), most preferably dyes selected from structure (I).
Preferably the polyoxyalkylene chain is of the form:

$[(CH_2CR_{12}HO)_x(CH_2CR_{14}HO)_yR_{13})$, wherein $x+y \leq 5$, $y \geq 1$ and $z = 0$ to 5, and

$R_{12}$ is selected from: H; $CH_3$; $CH_2O(CH_2CH_2O)_zH$ and mixtures thereof; and,

$R_{13}$ is selected from: $CH_3$; $C_2H_5$; H; $CH_2O(CH_2CH_2O)_zH$ and mixtures thereof; and,

$R_{14}$ is selected from: H; and, $CH_3$.

C1-C8-alkyl includes linear, branched or cyclic C1-C8-alkyl. It is preferred that C1-C8-alkyl is linear and of this group methyl and ethyl are preferred. Aryl is preferably selected from phenyl and naphthyl, most preferably phenyl.

The dye may be further substituted by uncharged organic groups. It is preferred that the uncharged organic groups should have a total molecular weight of less than 400, preferably less than 150. Preferred uncharged organic groups are selected from $NHCOCH_3$, $CH_3$, $C_2H_5$, $CH_3O$, $C_2H_5O$, amine, OH, $COOCH_3$, $COOC_2H_5$, $OCOCH_3$, $OCOC_2H_5$, Cl, F, Br, I, $NO_2$, $CH_3SO_2$, and CN.
The above uncharged organic groups are preferably found as substituents on the alkyl, aryl and the heteroaromatic groups.
Preferred examples of these compounds are:

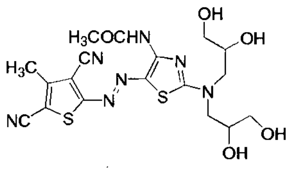
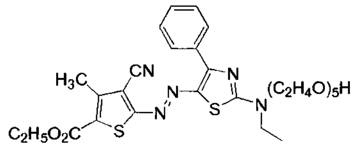
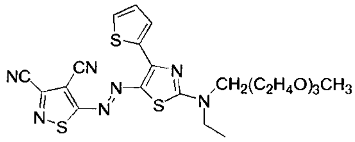
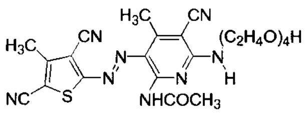
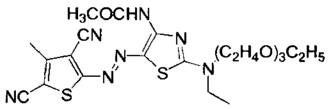
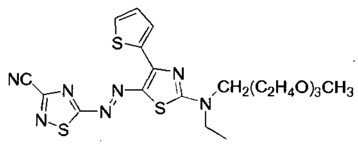

Suitable uncharged blue or violet mono-azo dyes for use in the present invention have been disclosed in EP 0201896 (BASF), EP 0362637 (BASF) and US5132412 (BASF).

<u>Other Dyes</u>

In a preferred embodiment of the invention, other shading colourants may be present. They are preferably selected from blue and violet pigment such as pigment violet 23, solvent and disperse dyes such as solvent violet 13, disperse violet 28, bis-azo direct dyes such as direct violet 9, 35, 51 and 99, and triphenodioxazine direct dyes such as direct violet 54.
Even more preferred is the presence of acid azine dyes as described in WO 2008/017570; the level of the acid azine dyes should be in the range from 0.0001 to 0.1 wt%. Preferred acid azine dyes are acid violet 50, acid blue 59 and acid blue 98. Blue and Violet cationic phenazine dyes may also be present.
Photobleaches such as sulphonated Zn/Al phthalocyanins may be present.

Surfactant

The laundry composition comprises between 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_8$ to $C_{18}$primary or secondary linear or branched alcohols with ethylene oxide, generally 5 to 40 EO.

Suitable anionic detergent compounds which may be used are usually watersoluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$alcohols, produced for example from tallow or coconut oil, sodium and potassium alkyl $C_9$ to $C_{20}$ benzene sulphonates, particularly sodium linear secondary alkyl

$C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts less than 50wt%, most preferably less than 20wt% of the surfactant system. Anionic surfactants can be present for example in amounts in the range from about 50% to 100 wt % of the surfactant system.

In another aspect which is also preferred the surfactant may be a cationic such that the formulation is a fabric conditioner.

Cationic Compound

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

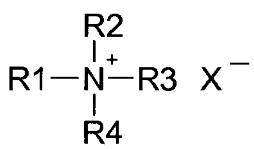

in which $R^1$ is a $C_{12}$ to $C_{22}$ alkyl or alkenyl chain; $R^2$, $R^3$ and $R^4$ are independently selected from $C_1$ to $C_4$ alkyl chains and X- is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.
The cationic compound may be present from 1.5 wt % to 50 wt % of the total weight of the composition. Preferably the cationic compound may be present from 2 wt % to 25 wt %, a more preferred composition range is from 5 wt % to 20 wt %.
The softening material is preferably present in an amount of from 2 to 60% by weight of the total composition, more preferably from 2 to 40%, most preferably from 3 to 30% by weight.
The composition optionally comprises a silicone.

Builders or Complexing Agents

Builder materials may be selected from 1) calcium sequestrant materials, 2) precipitating materials, 3) calcium ion-exchange materials and 4) mixtures thereof.
Examples of calcium sequestrant builder materials include alkali metal polyphosphates, such as sodium tripolyphosphate and organic sequestrants, such as ethylene diamine tetra-acetic acid.
Examples of precipitating builder materials include sodium orthophosphate and sodium carbonate.
Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.
The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.
Zeolite and carbonate (carbonate (including bicarbonate and sesquicarbonate) are preferred builders.
Preferably the heterocyclic dyes are post-dosed into granular detergent formulation in the form of spray dried granules with a size of less than 200 microns, or in coloured cues with a size of greater than 0.4mm.
The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ \ Al_2O_3.\ \ 0.8\text{-}6\ \ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.
Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).
Preferably the laundry detergent formulation is a non-phosphate built laundry detergent formulation, i.e., contains less than 1 wt% of phosphate. Preferably the laundry detergent formulation is carbonate built.

Fluorescent Agent

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1 ,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.
It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

Perfume

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.
It is commonplace for a plurality of perfume components to be present in a formulation. In the compositions of the present invention it is envisaged that there will be four or more, preferably five or more, more preferably six or more or even seven or more different perfume components.
In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.
Perfume and top note may be used to cue the whiteness benefit of the invention.
It is preferred that the laundry treatment composition does not contain a peroxygen bleach, e.g., sodium percarbonate, sodium perborate, and peracid.

Polymers

The composition may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.
Polymers present to prevent dye deposition, for example poly(vinylpyrrolidone), poly(vinylpyridine-N-oxide), and poly(vinylimidazole), are preferably absent from the formulation.

Enzymes

One or more enzymes are preferred present in a composition of the invention and when practicing a method of the invention.
Preferably the level of each enzyme is from 0.0001 wt% to 0.1 wt% protein.
Especially contemplated enzymes include proteases, alpha-amylases, cellulases, lipases, peroxidases/oxidases, pectate lyases, and mannanases, or mixtures thereof.
Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422). Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063, WO 09/107091 and WO09/111258.
Preferred commercially available lipase enzymes include Lipolase™ and Lipolase Ultra™, Lipex™ (Novozymes A/S).
The method of the invention may be carried out in the presence of phospholipase classified as EC 3.1.1.4 and/or EC 3.1.1.32. As used herein, the term phospholipase is an enzyme which has activity towards phospholipids. Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.
The enzyme and the shading dye may show some interaction and should be chosen such that this interaction is not negative. Some negative interactions may be avoided by encapsulation of one or other of enzyme or shading dye and/or other segregation within the product.
Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes

include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757,

WO 89/09259, WO 96/029397, and WO 98/012307. Commercially available cellulases include Celluzyme™, Carezyme™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from *C. cinereus,* and variants thereof as those described in WO 93/24618, WO 95/10602, and WO 98/15257. Commercially available peroxidases include Guardzyme™ and Novozym™ 51004 (Novozymes A/S).

Further enzymes suitable for use are disclosed in WO2009/087524, WO2009/090576, WO2009/148983 and WO2008/007318.

Enzyme Stabilizers

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear.

The indefinite article "a" or "an" and its corresponding definite article "the" as used herein means at least one, or one or more, unless specified otherwise.

Examples

Example 1

Individual detergents liquids containing 0.01wt% of the dyes below were prepared. The liquids contained 10% Non-ionic surfactant (R-$(OCH_2CH_2)_nOH$, where R is an alkyl chain of C12 to C15, and n is 7), 5% linear alkyl benzene sulphonate, and 5% Sodium lauryl ether sulphate with a mean of 3, ether ($-CH_2CH_2O-$) groups. The remainder of the formulation was water.

| Code | Structure |
|---|---|
| RS1<br>(Reference sample 1) | 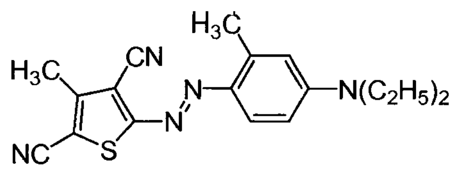 |

(continued)

| Code | Structure |
|---|---|
| RS2 (Reference sample 2) | 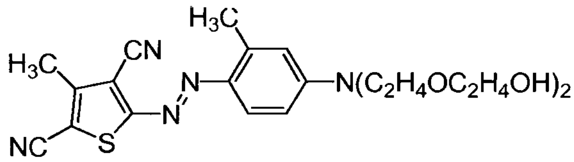 |
| E1 | 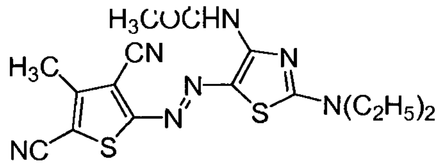 |
| E2 | 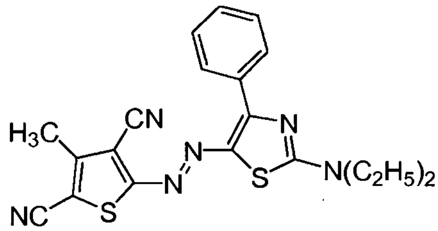 |

Example 2

A mixture of cotton, polyester and nylon-elastane (80:20) fabric was washed 4 times in demineralised water with 5g/L of the detergents of examples 1, at a liquor:cloth of 30:1 and a temperature of 293K. Following the washes the cloth were dried and the reflectance spectrum recorded on a reflectometer (UV excluded). The cloths were then placed in a weatherometer and exposed to standard Florida sunlight (0.35 W/m$^2$ at 340nm, with 20% relative humidity) for 12 hours. The reflectance spectrum was then recorded again.

The %Reflectance values were then converted to the remission function K/S (Kulbelka Munk) using the equation:

$$K/S = (1-R)^2/(2R)$$

Where R is %Reflectance/100. These values were then used to calculate the % of dye that had been photobleached by the light, using the equation:

$$\% \text{ bleached} = 100 \times [1 - \{K/S(1)-K/S(2)\}/\{K/S(3)-K/S(4)\}$$

where

K/S(1) = K/S value at 570nm of sample washed with dye after irradiation
K/S(2) = K/S value at 570nm of sample washed without dye after irradiation
K/S(3) = K/S value at 570nm of sample washed with dye before irradiation
K/S(4) = K/S value at 570nm of sample washed without dye before irradiation.

The results are given in the table below:

| Dye | % Bleached |
|---|---|
| RS1 | 5 |
| RS2 | 4 |
| E1 | 21 |

(continued)

| Dye | % Bleached |
|---|---|
| E2 | 12 |

The dyes with two heterocyclic components are photobleached more then the reference samples with one.

Example 3

Compound E1 was sand milled in an aqueous slurry containing lignin sulphonate. After milling the average particle size of the E1 particles was 0.35 microns. The aqueous slurry was then spray dried to produce granules containing 20wt% of the dye and 80wt% ligninsulfonate, with a mean diameter of 70 microns. These granules were named GE1.

The experiment was repeated but with the addition of sodium carboxymethyl cellulose (SCMS) to the slurry, such that the spray dried granules contained 22wt% E1, 10wt% SCMC and 68wt% ligninsulfonate. These granules were named GE2.

These granules provide a convenient route to dose the dye into granular detergents.

Comparable granules were made containing a 1:1 mix of Disperse Violet 28 and acid violet 50.

Exemplary Base Powder Formulations A, B, C and D

| Formulation | A | B | C | D |
|---|---|---|---|---|
| NaLAS | 25 | 10 | 12 | 14 |
| NI(7EO) | - | 2 | - | 10 |
| SDS | 5 | 10 | | |
| Soap | - | - | - | 2 |
| SLES (2EO) | 2 | - | - | 2 |
| Na tripolyphosphate | - | 15 | - | - |
| Zeolite A24 | 2 | - | - | 17 |
| Sodium silicate | 15 | 4 | 5 | 1 |
| Sodium carbonate | 35 | 20 | 30 | 20 |
| Sodium sulphate | 10 | 33 | 40 | 22 |
| Carboxymethyl -cellulose | 0.2 | 0.3 | - | 0.5 |
| Polyacrylate MW 4500 | - | - | - | 0.5 |
| Sodium chloride | - | - | - | 5 |
| lipase | 0.005 | 0.01 | - | 0.005 |
| Protease | 0.005 | 0.01 | - | 0.005 |
| Amylase | 0.001 | 0.003 | - | - |
| Cellulase | - | 0.003 | - | - |
| Acid Violet 50 | - | 0.002 | - | 0.0012 |
| E1 | 0.001 | 0.002 | 0.002 | 0.008 |
| Disperse violet 28 | - | 0.0002 | - | 0.0010 |
| Fluorescer | 0.1 | 0.15 | 0.05 | 0.3 |
| Water/impurities /minors | remainder | remainder | remainder | remainder |

Formulations were made using Lipex as the lipase, Savinase and Polarzyme as the protease, Carezyme as the cellulose and Stainzyme as the amylase. Disperse violet 28 is included as a post dosed 50 micron spray dried granule containing 20% dye and 80% lignin sulfonate.

Acid Violet 50 is added via a post dosed 75 micron spray dried granule contain 50wt% dye, 45wt% $Na_2SO_4$ and 5 wt% sodium carboxymethylcellulose.

E1 was added via GE2 of example 3.

Exemplary Base Liquid Formulations A, B, C and D

| Formulation | A | B | C | D |
|---|---|---|---|---|
| NaLAS | 14 | 10 | 15 | 12 |
| NI(7EO) | 10 | 2 | 21 | 0 |
| SLES(3EO) | 7 | 10 | 7 | 12 |
| Soap | 2 | 4 | 1 | 0 |
| Citric acid | 1 | 1 | - | 1 |
| Glycerol | 0 | 1 | 5 | 0 |
| Propylene glycol | 5 | 3 | 0 | 4 |
| Sodium chloride | 1 | - | - | - |
| Ethoxylated polyethylene imine | 0.5 | 2 | - | - |
| Triethanol amine | 0 | 0.5 | 3 | 1 |
| Perfume | 0.2 | 0.1 | 0.3 | 0.4 |
| Protease | 0.005 | 0.01 | - | 0.005 |
| Amylase | 0.001 | 0.003 | - | - |
| Lipase | - | 0.003 | - | - |
| Fluorescer | 0.1 | 0.15 | 0.05 | 0.3 |
| E1 | 0.001 | 0.003 | 0.002 | 0.005 |
| Solvent Violet 13 | - | 0.0002 | 0 | 0.001 |
| Water/impurities/minors | remainder | remainder | remainder | remainder |

For both powder and liquids formulations, enzyme levels are given as percent pure enzyme. NI(7EO) refers to $R-(OCH_2CH_2)_nOH$, where R is an alkyl chain of C12 to C15, and n is 7. NaLAS is linear alkyl benzene sulphonate (LAS) and (SLES(3EO)) is $C_{12}$-$C_{18}$ alkyl polyethoxylate (3.0) sulphate, SDS is sodium dodecyl sulfate.

## Claims

1. A laundry treatment composition comprising:

(i) from 2 to 70 wt% of a surfactant; and,
(ii) from 0.00001 to 0.5 wt% of an uncharged blue or violet mono-azo dye, wherein the uncharged blue or violet mono-azo dyes are selected from:

$$D_1\text{-}N{=}N\text{-}D_2,$$

wherein $D_1$ is a heterocyclic aromatic group; and,
$D_2$ is a heteroaromatic group.

2. A laundry treatment composition according to claim 1, wherein $D_1$ and $D_2$ are independently selected from: thiophenes; thiazole; isothiazole; thiadiazole; and, pyridinyl.

3. A laundry treatment composition according to claim 2, wherein the dye is selected from:

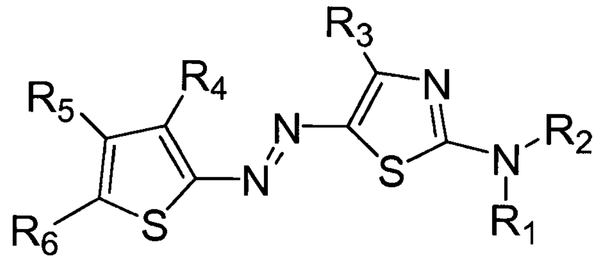

(I);

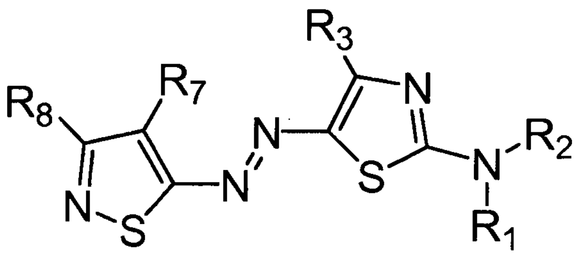

(II);

and,

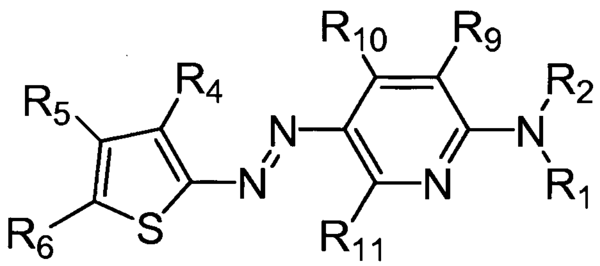

(III),

wherein:

$R_1$ and $R_2$ are independently selected from: H; C1-C8-alkyl; benzyl; phenyl; and, polyoxyalkylene, and wherein only one of $R_1$ and $R_2$ may be H;
$R_3$ is selected from: acid amide; C1-C8-alkyl; heteroaromatic; and, aryl;
$R_4$ is selected from: CN; $NO_2$; alkoxy; carboxylic acid ester; alkylsulfonyl; and, arylsulfonyl;
$R_5$ is selected from: F; Cl; Br; CN; $NO_2$; alkoxy; phenyl; benzyl; amine; alkyl; and, carboxylic acid ester;
$R_6$ selected from: H; CN; $NO_2$; alkoxy; carboxylic acid ester alkylsulfonyl; arylsulfonyl;
$R_7$ is selected from: CN; SCN; F; Cl; and, Br;
$R_8$ is selected from: C1-C8-alkyl; heteroaromatic; and, aryl.
$R_9$ is selected from CN; $NH_2C(O)$; $NO_2$; and, acetyl;
$R_{10}$ is a C1-C8-alkyl; and,
$R_{11}$ is an acid amide.

**4.** A laundry treatment composition according to claim 3, wherein $R_1$ and $R_2$ are independently selected from: H; and, polyoxyalkylene.

**5.** A laundry treatment composition according to claim 3, wherein $R_3$ is selected from: $NHCOCH_3$; phenyl; and, thienyl.

**6.** A laundry treatment composition according to claim 3, wherein $R_4$ is CN.

**7.** A laundry treatment composition according to claim 3, wherein $R_5$ is selected from: $CH_3$; and, $C_2H_5$.

**8.** A laundry treatment composition according to claim 3, wherein $R_7$ is CN.

**9.** A laundry treatment composition according to claim 3, wherein $R_8$ is selected from: thienyl; and, phenyl.

**10.** A laundry treatment composition according to claim 3, wherein $R_9$ is CN.

**11.** A laundry treatment composition according to claim 3, wherein $R_{10}$ is selected from: $CH_3$; and, $C_2H_5$.

**12.** A laundry treatment composition according to claim 3, wherein $R_{11}$ is $NHCOCH_3$.

**13.** A laundry treatment composition according to claim 3, wherein the polyoxyalkylene is of the form: $[(CH_2CR_{12}HO)_x(CH_2CR_{14}HO)_yR_{13})$, wherein $x+y \leq 5$, $y \geq 1$, and
$R_{12}$ is selected from: H; $CH_3$; $CH_2O(CH_2CH_2O)_zH$, wherein z = 0 to 5, and mixtures thereof; and,
$R_{13}$ is selected from: $CH_3$; $C_2H_5$; H; $CH_2O(CH_2CH_2O)_zH$, wherein z = 0 to 5, and mixtures thereof; and, $R_{14}$ is selected from: H; and, $CH_3$.

**14.** A laundry treatment composition according to any one of the preceding claim, wherein the dye is further substituted by uncharged organic groups.

**15.** A laundry treatment composition according to any one of the preceding claim, wherein composition comprises perfume in the range from 0.001 to 3 wt %.

**16.** A method of treating a laundry textile, the method comprising the steps of:

(i) treating a textile with an aqueous solution of the uncharged blue or violet mono-azo dye as defined in any one of the preceding claims, the aqueous solution comprising from 0.1 ppb to 500 ppm of the dye and, from 0.0 g/L to 3 g/L, preferably 0.3 to 2 g/L, of a surfactant;
(ii) optionally rinsing; and,
(iii) drying the textile.

**Patentansprüche**

**1.** Wäschebehandlungszusammensetzung,
die Folgendes aufweist:

(i) 2 bis 70 Gew.-% eines Tensids und
(ii) 0,00001 bis 0,5 Gew.-% eines ungeladenen, blauen oder violetten Monoazofarbstoffs, wobei die ungeladenen, blauen oder violetten Monoazofarbstoffe ausgewählt sind aus:

$$D_1\text{–}N\text{=}N\text{–}D_2$$

wobei $D_1$ ein heterocyclischer aromatischer Rest ist, und
$D_2$ ein heteroaromatischer Rest ist.

**2.** Wäschebehandlungszusammensetzung nach Anspruch 1,
wobei $D_1$ und $D_2$ unabhängig voneinander aus Thiophenen, Thiazol, Isothiazol, Thiadiazol und Pyridinyl ausgewählt sind.

**3.** Wäschebehandlungszusammensetzung nach Anspruch 2,
wobei der Farbstoff ausgewählt ist aus:

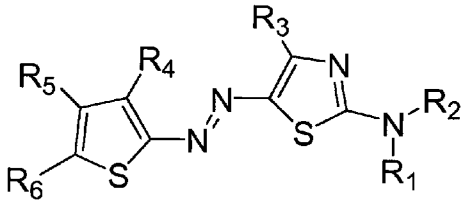

(I);

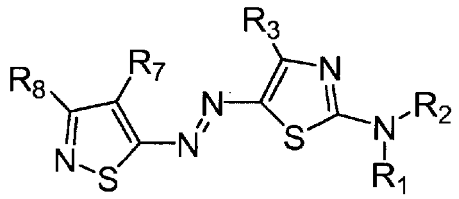

(II);

und

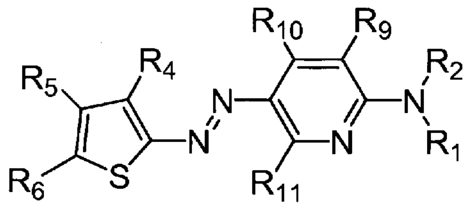

(III),

worin:

$R_1$und $R_2$ unabhängig voneinander aus H, $C_1$-$C_8$-Alkyl, Benzyl, Phenyl und Polyoxyalkylen ausgewählt sind und wobei nur einer der Reste $R_1$ und $R_2$ gleich H sein kann;
$R_3$ aus Säureamid, $C_1$-$C_8$-Alkyl, einem heteroaromatischen Rest und Aryl ausgewählt ist;
$R_4$ aus CN, $NO_2$, Alkoxy, Carbonsäureester, Alkylsulfonyl und Arylsulfonyl ausgewählt ist;
$R_5$ aus F, Cl, Br, CN, $NO_2$, Alkoxy, Phenyl, Benzyl, Amin, Alkyl und Carbonsäureester ausgewählt ist;
$R_6$ aus H, CN, $NO_2$, Alkoxy, Carbonsäureester, Alkylsulfonyl, Arylsulfonyl ausgewählt ist;
$R_7$ aus CN, SCN, F, Cl und Br ausgewählt ist;
$R_8$ aus $C_1$-$C_8$-Alkyl, einem heteroaromatischen Rest und Aryl ausgewählt ist; $R_9$ aus CN, $NH_2C(O)$, $NO_2$ und Acetyl ausgewählt ist;
$R_{10}$ gleich $C_1$-$C_8$-Alkyl ist; und
$R_{11}$ ein Säureamid ist.

**4.** Wäschebehandlungszusammensetzung nach Anspruch 3, wobei $R_1$ und $R_2$ unabhängig voneinander aus H und Polyoxyalkylen ausgewählt sind.

**5.** Wäschebehandlungszusammensetzung nach Anspruch 3, wobei $R_3$ aus $NHCOCH_3$, Phenyl und Thienyl ausgewählt ist.

**6.** Wäschebehandlungszusammensetzung nach Anspruch 3, wobei $R_4$ gleich CN ist.

**7.** Wäschebehandlungszusammensetzung nach Anspruch 3, wobei $R_5$ aus $CH_3$ und $C_2H_5$ ausgewählt ist.

**8.** Wäschebehandlungszusammensetzung nach Anspruch 3, wobei $R_7$ gleich CN ist.

**9.** Wäschebehandlungszusammensetzung nach Anspruch 3, wobei $R_8$ aus Thienyl und Phenyl ausgewählt ist.

**10.** Wäschebehandlungszusammensetzung nach Anspruch 3, wobei $R_9$ gleich CN ist.

**11.** Wäschebehandlungszusammensetzung nach Anspruch 3, wobei $R_{10}$ aus $CH_3$ und $C_2H_5$ ausgewählt ist.

**12.** Wäschebehandlungszusammensetzung nach Anspruch 3, wobei $R_{11}$ gleich $NHCOCH_3$ ist.

**13.** Wäschebehandlungszusammensetzung nach Anspruch 3, wobei das Polyoxyalkylen die Formel $(CH_2CR_{12}HO)_x(CH_2CR_{14}HO)_yR_{13}$ hat, worin $x + y \leq 5$, $y \geq 1$ sind, und $R_{12}$ aus H, $CH_3$, $CH_2O(CH_2CH_2O)_zH$, wobei z = 0 bis 5 ist und Gemischen davon ausgewählt ist; und $R_{13}$ aus $CH_3$, $C_2H_5$, H, $CH_2O(CH_2CH_2O)_zH$, wobei z = 0 bis 5, und Gemischen davon ausgewählt ist und $R_{14}$ aus H und $CH_3$ ausgewählt ist.

**14.** Wäschebehandlungszusammensetzung nach einem der vorstehenden Ansprüche, wobei der Farbstoff ferner mit ungeladenen organischen Resten substituiert ist.

**15.** Wäschebehandlungszusammensetzung nach einem der vorstehenden Ansprüche, wobei die Zusammensetzung einen Duftstoff im Bereich von 0,001 bis 3 Gew.-% aufweist.

**16.** Verfahren zum Behandeln von Textilmaterialien in einer Waschmaschine, wobei das Verfahren die folgenden Schritte aufweist:

(i) Behandeln eines Textilmaterials mit einer wässrigen Lösung des ungeladenen, blauen oder violetten Monoazofarbstoffs nach einem der vorstehenden Ansprüche, wobei die wässrige Lösung 0,1 ppb bis 500 ppm des Farbstoffs und 0,0 bis 3 g/l, vorzugsweise 0,3 bis 2 g/l eines Tensids aufweist;
(ii) gegebenenfalls Spülen und
(iii) Trocknen des Textilmaterials.

**Revendications**

**1.** Composition de traitement du linge, comprenant :

(i) de 2 % à 70 % en poids d'un tensioactif,
(ii) de 0,00001 % à 0,5 % en poids d'un colorant mono-azoïque non chargé bleu ou violet, dans lequel les colorants mono-azoïques non chargés bleus ou violets sont sélectionnés parmi :

$$D_1-N=N-D_2,$$

dans lequel $D_1$ est un groupe aromatique hétérocyclique ; et $D_2$ est un groupe hétéroaromatique.

**2.** Composition de traitement du linge selon la revendication 1, dans laquelle $D_1$ et $D_2$ sont sélectionnés indépendamment parmi : les thiophènes ; le thiazole ; l'isothiazole ; le thiadiazole ; et le pyridinyle.

**3.** Composition de traitement du linge selon la revendication 2, dans laquelle le colorant est sélectionné parmi :

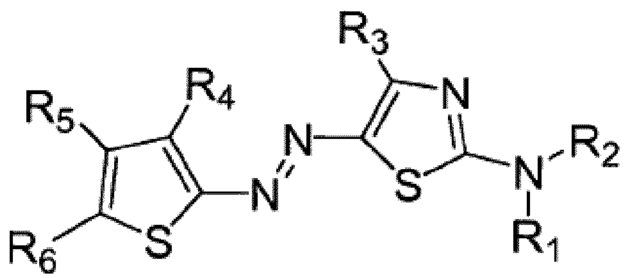

(I);

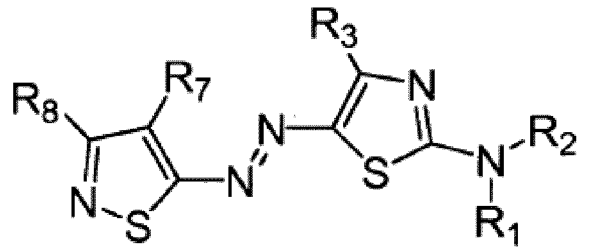

(II);

et

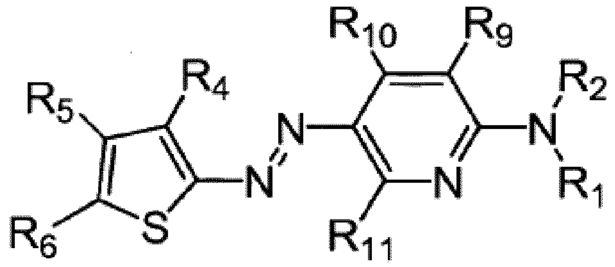

(III),

dans lesquels :

$R_1$ et $R_2$ sont sélectionnés indépendamment parmi : H ; un alkyle en $C_1$ à $C_8$ ; benzyle ; phényle ; et un polyoxyalkylène, et dans lesquels seulement un parmi $R_1$ et $R_2$ peut être H ;
$R_3$ est sélectionné parmi : un amide d'acide ; un alkyle en $C_1$ à $C_8$ ; un hétéroaromatique ; et un aryle ;
$R_4$ est sélectionné parmi : CN ; $NO_2$ ; un alcoxy ; un ester d'acide carboxylique ; un alkylsulfonyle ; et un arylsulfonyle ;
$R_5$ est sélectionné parmi : F ; Cl ; Br ; CN ; $NO_2$ ; un alcoxy ; phényle ; benzyle ; une amine ; un alkyle ; et un ester d'acide carboxylique ;
$R_6$ est sélectionné parmi : H ; CN ; $NO_2$ ; un alcoxy ; un ester d'acide carboxylique ; un alkylsulfonyle ; un arylsulfonyle ;
$R_7$ est sélectionné parmi : CN ; SCN ; F ; Cl ; et Br ;
$R_8$ est sélectionné parmi : un alkyle en $C_1$ à $C_8$ ; un hétéroaromatique ; et un aryle ;
$R_9$ est sélectionné parmi : CN ; $NH_2C(O)$ ; $N0_2$ ; et acétyle ;
$R_{10}$ est un alkyle en $C_1$ à $C_8$ ; et
$R_{11}$ est un amide d'acide.

**4.** Composition de traitement du linge selon la revendication 3, dans laquelle $R_1$ et $R_2$ sont sélectionnés indépendamment parmi : H ; et un polyoxyalkylène.

**5.** Composition de traitement du linge selon la revendication 3, dans laquelle $R_3$ est sélectionné parmi : $NHCOCH_3$ ; phényle ; et thiényle.

**6.** Composition de traitement du linge selon la revendication 3, dans laquelle $R_4$ est CN.

**7.** Composition de traitement du linge selon la revendication 3, dans laquelle $R_5$ est sélectionné parmi : $CH_3$ ; et $C_2H_5$.

**8.** Composition de traitement du linge selon la revendication 3, dans laquelle $R_7$ est CN.

**9.** Composition de traitement du linge selon la revendication 3, dans laquelle $R_8$ est sélectionné parmi : thiényle ; et phényle.

**10.** Composition de traitement du linge selon la revendication 3, dans laquelle $R_9$ est CN.

**11.** Composition de traitement du linge selon la revendication 3, dans laquelle $R_{10}$ est sélectionné parmi : $CH_3$ ; et $C_2H_5$.

**12.** Composition de traitement du linge selon la revendication 3, dans laquelle $R_{11}$ est $NHCOCH_3$.

**13.** Composition de traitement du linge selon la revendication 3, dans laquelle le polyoxyalkylène est sous la forme : $[(CH_2CR_{12}HO)_x(CH_2CR_{14}HO)_yR_{13})$ , dans laquelle x + y 5, $y \geq 1$ et
$R_{12}$ est sélectionné parmi : H ; $CH_3$ ; $CH_2O\ (CH_2\text{-}CH_2O)_zH$, dans laquelle z = 0 à 5, et leurs mélanges ; et
$R_{13}$ est sélectionné parmi : $CH_3$ ; $C_2H_5$ ; $CH_2O(CH_2\text{-}CH_2O)_zH$, dans laquelle z = 0 à 5, et leurs mélanges ; et $R_{14}$ est sélectionné parmi : H ; et $CH_3$.

**14.** Composition de traitement du linge selon l'une quelconque des revendications précédentes, dans laquelle le colorant est en outre substitué avec des groupes organiques non chargés.

**15.** Composition de traitement du linge selon l'une quelconque des revendications précédentes, dans laquelle la composition comprend un parfum dans la plage de 0,001 % à 3 % en poids.

**16.** Méthode de traitement d'un textile de linge, la méthode comprenant les étapes suivantes :

(i) le traitement d'un textile avec une solution aqueuse du colorant mono-azoïque non chargé bleu ou violet tel que défini dans l'une quelconque des revendications précédentes, la solution aqueuse comprenant de 0,1 ppb à 500 ppm du colorant et de 0,0 g/l à 3 g/l, de préférence de 0,3 g/l à 2 g/l, d'un tensioactif ;
(ii) éventuellement un rinçage ; et
(iii) le séchage du textile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006045375 A
- US 7208459 B
- WO 2008087497 A
- EP 0201896 A
- EP 0362637 A
- US 5132412 A
- WO 2008017570 A
- EP 328177 A
- EP 070074 A
- EP 346995 A
- EP 0239910 A
- EP 0384070 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- WO 09107091 A
- WO 09111258 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 2009087524 A
- WO 2009090576 A
- WO 2009148983 A
- WO 2008007318 A
- WO 9219709 A
- WO 9219708 A


### Non-patent literature cited in the description


- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- **POUCHER.** *Journal of the Society of Cosmetic Chemists,* 1955, vol. 6 (2), 80
- **DARTOIS et al.** *Biochemica et Biophysica Acta,* 1993, vol. 1131, 253-360